# EUROPÄISCHE PATENTANMELDUNG

(11) **EP 2 320 285 A1**
(43) Veröffentlichungstag der Anmeldung: **11.05.2011**
(21) Anmeldenummer: 09175316.0
(22) Anmeldetag: 06.11.2009
(51) Int. Cl.: G05B 19/042

(54) **Datenbearbeitungsvorrichtung für ein Feldgerät**

(71) Anmelder: VEGA Grieshaber KG, 77709 Wolfach (DE)
(72) Erfinder: Schätzle, Ralf, 77716 Fischerbach (DE); Faist, Fridolin, 77709 Oberwolfach (DE); Gros, Thomas, 56479 Neustadt (DE)
(74) Vertreter: Schäflein, Christian Georg

(57) **Zusammenfassung**

Es wird eine Datenbearbeitungsvorrichtung (125) für ein Feldgerät (101) der Füllstandsmessung und/oder Druckmesstechnik beschrieben, wobei ein Eingang (122) zum Empfangen von Daten von einer Messwertverarbeitung (109) eingerichtet ist und ein Ausgang (123) zum Bereitstellen von verschlüsselten Daten eingerichtet ist. Die verschlüsselten Daten werden für einen Empfänger der Daten als verschlüsselte Daten gekennzeichnen.

## Beschreibung

### Technisches Gebiet

Die vorliegende Erfindung betrifft das technische Gebiet der Messtechnik, insbesondere die Füllstandmesstechnik und Druckmesstechnik. Insbesondere betrifft die vorliegende Erfindung eine Datenbearbeitungsvorrichtung, ein Verfahren zur Datenbearbeitung, eine Datensammelvorrichtung, ein Verfahren zum Sammeln von Daten und ein Programmelement zur Datenbearbeitung.

### Hintergrund der Erfindung

Immer mehr Firmen gehen dazu über den Betrieb ihrer Feldgeräte oder Sensoren in die Hände von externen Betreibern zu legen. Durch die Auslagerung des Betriebs der Feldgeräte können Kosten gespart werden, da kein Know-How für den Betrieb der Feldgeräte bereitgehalten werden mag. Das Bedienen der Feldgeräte mag oftmals nicht zu den Kernkompetenzen der Unternehmen gehören.

Jedoch möchten die Verantwortlichen für die Prozessabläufe in den Industrieanlagen in den Unternehmen stets informiert sein, welche aktuellen Messwerte im Feld vorherrschen, um die Prozesse zu optimieren.

Um für viele unterschiedliche und oftmals konkurrierende Firmen die aktuellen Messwerte bereitzustellen, mag ein öffentliches Kommunikationsnetz, wie beispielsweise das Internet, genutzt werden. Auf solch ein öffentliches Kommunikationsnetz mag auch für die Verteilung der Messwerte, die von den einzelnen Feldgeräten geliefert werden, zurückgegriffen werden.

Die Daten mögen von den Feldgeräten direkt oder über an den Feldgeräten angeschlossene Auswertegeräte an große Datenbanken, die auf Servern laufen, geliefert werden.

Auswertegeräte, wie beispielsweise Auswertegeräte der Firma VEGA, mögen Messwerte unverschlüsselt an einen Server, beispielsweise einen VEGA WEB-VV (Visual Vega) Server übertragen, der die Daten entgegen nehmen mag. Der Anwender kann dann mit einem Webbrowser die Messwerte vom VEGA WEB-VV Server via Internet abrufen.

Die Daten mögen auf dem Weg vom Feldgerät zum Server aber auch beim Abruf mit dem Webbrowser unverschlüsselt über das Internet übertragen werden, d.h. mit entsprechenden Mitteln wäre es unter Umständen möglich die Daten mitzuhören bzw. zu verändern.

Die Druckschrift DE 10 2007 002 351 A1 mag eine automatische Überwachung und Steuerung von Füllständen beschreiben.

Die Druckschrift DE 10 2005 051 580 A1 mag ein Kommunikationsmodul zur Weiterleitung von Messwerten an einen Server beschreiben.

### Zusammenfassung der Erfindung

Es mag als ein Bedürfnis angesehen werden, ein sicheres Übertragen von Messwerten zu gewährleisten.

Gemäß einem exemplarischen Ausführungsbeispiel der vorliegenden Erfindung mag eine Datenbearbeitungsvorrichtung, ein Verfahren zur Datenbearbeitung, eine Datensammelvorrichtung, ein Verfahren zum Sammeln von Daten und ein Programmelement zur Datenbearbeitung geschaffen werden.

Gemäß einem weiteren exemplarischen Ausführungsbeispiel der vorliegenden Erfindung mag eine Datenbearbeitungsvorrichtung für ein Feldgerät der Füllstandsmessung und/oder Druckmesstechnik bereitgestellt werden, welche einen Eingang, einen Ausgang und eine Verschlüsselungseinrichtung aufweisen mag. Der Eingang und der Ausgang mag jeweils mit der Verschlüsselungsseinrichtung verbunden sein. Der Eingang mag zum Empfangen von Daten von einer Messwertverarbeitung, insbesondere zum Empfangen eines Messwerts eingerichtet sein. Der Ausgang mag zum Bereitstellen der Daten oder zum Bereitstellen des Messwertes eingerichtet sein.

Ferner mag die Verschlüsselungseinrichtung eingerichtet sein, die empfangenen Daten oder den empfangenen Messwert mit einem vorgebbaren, einstellbaren oder fest eingestellten Verschlüsselungsalgorithmus zu verschlüsseln und die Verschlüsselungseinrichtung mag eingerichtet sein, für einen Empfänger der Daten oder des Messwerts die verschlüsselten Daten als verschlüsselte Daten zu kennzeichnen. Somit mag erkennbar sein, dass die Daten oder der Messwert verschlüsselt sind/ist. In einem Beispiel mag der Verschlüsselungsalgorithmus zwar vorgebbar sein, aber wenn er eingestellt sein mag, mag der Verschlüsselungsalgorithmus permanent genutzt werden. Ferner mag die Verschlüsselungseinrichtung eingerichtet sein, die gekennzeichneten verschlüsselten Daten am Ausgang der Datenbearbeitungsvorrichtung bereitzustellen. Die Datenbearbeitungsvorrichtung mag auch als Messwertbearbeitungsvorrichtung bezeichnet werden.

Die Datenbearbeitungsvorrichtung mag als ein Auswertegerät realisiert sein. Sie kann aber auch als ein Hardwaremodul oder integrierter Schaltkreis in dem Feldgerät integriert sein. Das Feldgerät mag zum Messen von Drücken und/oder Füllständen eingerichtet sein. Außerdem mag die Datenbearbeitungsvorrichtung auch für Feldgeräte ausserhalb der Füllstandsmessung und Druckmesstechnik eingesetzt werden können.

Als Kennzeichnen der verschlüsselten Daten mag jede Form einer Markierung verstanden werden, die es beispielsweise der Datensammeleinrichtung erlauben mag die verschlüsselten Daten von den nicht verschlüsselten Daten zu unterscheiden. Auf Empfängerseite, beispielsweise an der Datensammelvorrichtung, mag ein Empfang an örtlich unterschiedlichen Eingängen ebenso als Kennzeichnung dienen, wie ein Empfang auf unterschiedlichen physikalischen Adressen oder unterschiedlichen logischen Adressen oder Ports. Eine MAC (Medium Access Control) Adresse mag eine physikalische Adresse sein. Insbesondere mag eine URI (Uniform Resource Identifier) oder URL (Uniform Resource Locator) eine Adresse sein, insbesondere wenn ein http-Protokol (Hypertext Transfer Protocol) oder https-Protokoll (Hypertext Transfer Protocol Secure) zur Datenübertragung genutzt werden mag.

Gemäß einem anderen exemplarischen Ausführungsbeispiel der vorliegenden Erfindung wird ein Verfahren zur Datenbearbeitung angegeben, welches das Empfangen von Daten an einem Eingang der Datenbearbeitungsvorrichtung aufweisen mag. Ferner mag das Verfahren das Verschlüsseln der empfangenen Daten mit einem vorgebbaren Verschlüsselungsalgorithmus und das Kennzeichnen der Daten für einen Empfänger aufweisen. Mit dieser Kennzeichnung mag einem Empfänger mitgeteilt werden, dass die Daten verschlüsselt sind, d.h, dass verschlüsselte Daten vorliegen. Die Kennzeichnung mag auch durch das Versenden der Daten oder Messwerte an unterschiedliche Adressen realisierbar sein. Nach der Kennzeichnung mag das Bereitstellen der verschlüsselten und gekennzeichneten Daten an einem Ausgang der Datenbearbeitungsvorrichtung erfolgen.

Gemäß einem weiteren exemplarischen Ausführungsbeispiel der vorliegenden Erfindung mag eine Datensammelvorrichtung geschaffen werden, welche einen ersten Eingang, einen zweiten Eingang, eine Zusammenführeinrichtung und eine Entschlüsselungseinrichtung aufweisen mag. Die Eingänge mögen eine Vielzahl von Eingängen aufweisen. Der erste Eingang mag mit der Entschlüsselungseinrichtung verbunden sein. Bei dem ersten Eingang mag es sich um den Eingang für verschlüsselte Daten handeln.

Die Entschlüsselungseinrichtung mag mit der Zusammenführeinrichtung verbunden sein. Außerdem mag der zweite Eingang mit der Zusammenführeinrichtung verbunden sein. Über den zweiten Eingang mögen im Wesentlichen unverschlüsselte Daten an die Zusammenführeinrichtung gelangen.

Die Entschlüsselungseinrichtung mag zum Entschlüsseln von verschlüsselten Daten eingerichtet sein. Für die Entschlüsselung mag die Entschlüsselungseinrichtung einen Entschlüsselungsalgorithmus ausführen, der komplementär zu dem Verschlüsselungsalgorithmus sein mag, also die Verschlüsselung aufheben mag. Ferner mag der Verschlüsselungsalgorithmus und der Entschlüsselungsalgorithmus, wenn nötig, zusammengehörende Schlüsselpaare verwenden.

Die Zusammenführeinrichtung mag zum Zusammenführen von Daten genutzt werden, die an dem ersten Eingang empfangen wurden und von Daten, die an dem zweiten Eingang empfangen wurden. An einem Ausgang mag die Zusammenführeinrichtung Daten im selben Format bereitstellen, unabhängig davon ob die Daten zuvor verschlüsselt waren oder nicht.

Gemäß einem weiteren exemplarischen Ausführungsbeispiel der vorliegenden Erfindung mag ein Verfahren zum Sammeln von Daten bereitgestellt werden, welches das Empfangen von Daten an einem ersten Eingang einer Datensammelvorrichtung aufweist.

Die am ersten Eingang empfangenen Daten mögen an eine Entschlüsselungseinrichtung bereitgestellt oder weitergeleitet werden. Die Entschlüsselungseinrichtung mag die am ersten Eingang empfangenen Daten entschlüsseln und die entschlüsselten Daten an eine Zusammenführeinrichtung bereitstellen.

Das Verfahren zum Sammeln von Daten mag ferner beispielsweise das Empfangen von Daten an einem zweiten Eingang der Datensammeleinrichtung aufweisen und die Daten an die Zusammenführeinrichtung weiterleiten.

Die Zusammenführeinrichtung mag somit für das Zusammenführen der Daten des ersten Eingangs und des zweiten Eingangs sorgen. Insbesondere mag die Zusammenführeinrichtung die vorher verschlüsselten Daten und die unverschlüsselten Daten zusammenführen um sie danach einheitlich zu behandeln.

Ferner mag gemäß einem exemplarischen Ausführungsbeispiel der vorliegenden Erfindung ein Programmelement zur Datenbearbeitung geschaffen werden, das, wenn es auf einem Prozessor ausgeführt werden mag, eingerichtet sein mag, zumindest ein Verfahren auszuführen ausgewählt aus der Gruppe der Verfahren bestehend aus dem erfindungsgemäßen Verfahren zur Datenbearbeitung und dem erfindungsgemäßen Verfahren zum Sammeln von Daten.

Gemäß noch einem anderen exemplarischen Ausführungsbeispiel der vorliegenden Erfindung mag ein computerlesbares Speichermedium geschaffen werden, welches einen Programm Code enthält, der, wenn er auf einem Prozessor ausgeführt werden mag, eingerichtet sein mag, zumindest ein Verfahren auszuführen ausgewählt aus der Gruppe der Verfahren bestehend aus dem erfindungsgemäßen Verfahren zur Datenbearbeitung und dem erfindungsgemäßen Verfahren zum Sammeln von Daten.

Ein computerlesbares Speichermedium mag eine Floppydisk oder Festplatte, ein USB-Speichermedium (Universal Serial Bus), ein RAM (Random Access Memory), ein ROM (Read Only Memory) oder ein EPROM (Erasable Programmable Read Only Memory) sein. Ein computerlesbares Speichermedium kann aber auch ein Datennetz sein, beispielsweise das Internet, welches es zulässt, einen Programmcode herunterzuladen.

Weitere exemplarische Ausführungsbeispiele und Fortbildungen der Erfindung mögen sich aus den abhängigen Patentansprüchen ergeben.

I²C, I2C oder IIC (für Inter-Integrated Circuit) mag ein serieller Bus für Computersysteme sein. Er mag benutzt werden, um Geräte mit geringer Übertragungsgeschwindigkeit an einem Embedded System oder eine Hauptplatine anzuschließen.

Das HART® Protokoll (Highway Adressible Remote Transmitter) kann insbesondere als ein offenes Master Slave Protokoll für busadressierbare Feldgeräte bezeichnet werden. Es kann eine Methode implementieren, Daten mittels Frequency Shift Keying (FSK), aufgesetzt auf dem 4 bis 20 mA-Prozesssignal, zu übertragen, um Fernkonfiguration und Diagnoseüberprüfungen zu ermöglichen.

Sowohl I²C als auch HART^{®} mögen sich als Protokoll zur Kommunikation mit einem Feldgerät eignen, z. B. mit einem Auswertegerät, mit einem Füllstandsmessgerät oder mit einem Druckmessgerät.

Feldgeräte im Sinne dieser Anmeldung mögen jede Art von Messgeräten sein, beispielsweise Füllstandmessgeräte, Druckmessgeräte, Grenzstanderfassungsmessvorrichtungen oder Temperaturmessvorrichtungen, um nur einige Beispiele zu nennen. Zur Erfassung mögen unterschiedliche physikalische Effekte ausgenutzt werden. Die Messwerterfassung kann mit Hilfe von Radarstrahlen, Ultraschall, Vibration, geführter Mikrowelle (TDR, Time Domain Reflexion) oder kapazitiven Effekte erfolgen.

Eine Datenbearbeitungsvorrichtung, beispielsweise in einem Auswertegerät oder in einem Feldgerät, mag eine Vorrichtung sein, die sowohl verschlüsselt als auch unverschlüsselt Daten an eine Datensammelvorrichtung, wie beispielsweise einen Server oder eine auf einem Server laufende Datenbank, über ein Netzwerk übertragen mag. Abhängig ob die Daten verschlüsselt oder unverschlüsselt sind mögen die Daten an unterschiedliche Ziele oder Zieladressen gesendet werden.

Durch das Verschlüsseln der Daten mag ein Mithören bzw. Verändern der Daten im Wesentlichen nicht mehr so einfach möglich.

Durch das Benutzen unterschiedlicher Zieladressen für die verschlüsselten und unverschlüsselten Daten mögen sich bestehende Server Applikation für das Empfangen von verschlüsselten Daten anpassen lassen. Dadurch, dass die Datensammelvorrichtung oder der Server unverschlüsselte Daten parallel zu den verschlüsselten Daten empfangen kann, mag es möglich sein auch einfache Feldgeräte einzusetzen, die nicht über die Möglichkeit zum Verschlüsseln verfügen mögen, da sie beispielsweise im Wesentlichen nicht die nötige Rechenleistung zum Verschlüsseln der Daten besitzen mögen.

Das System mag im Wesentlichen mindestens ein Feldgerät oder ein Auswertgerät aufweisen, das verschlüsselte Daten an einen Server versendet. Der Server mag auf einer Zieladresse unverschlüsselte Daten und auf einer weiteren Zieladresse verschlüsselte Daten entgegennehmen. Die verschlüsselten Daten mögen von einem Modul z.B. der Entschlüsselungseinrichtung entschlüsselt werden und mögen nach der Entschlüsselung dem Format der unverschlüsselten Daten entsprechen, so dass sie einheitlich behandelt werden können mögen. In anderen Worten mag das bedeuten, die weitere Verarbeitung der Daten mag in für die vormals verschlüsselten Daten im Wesentlichen identisch wie für die unverschlüsselten Daten ablaufen. Somit mag auch das Aufbereiten der Daten auf der Geräteseite in beiden Fällen, d.h. in dem verschlüsselten Fall bzw. dem unverschlüsselten Fall, im Wesentlichen identisch erfolgen. Im Falle der verschlüsselten Übertragung mögen vor dem Versand die Daten jedoch verschlüsselt werden. Im Wesentlichen unmittelbar nach dem Empfang der verschlüsselten Daten auf der Seite der Datensammelvorrichtung mag die Verschlüsselung rückgängig gemacht werden, um möglichst frühzeitig die Daten in herkömmlicher also unverschlüsselter Art und Weise weiter zu verarbeiten.

Das Bereitstellen der verschlüsselten Daten oder eines verschlüsselten Messwerts von der Datenbearbeitungsvorrichtung an die Datensammelvorrichtung mag Ereignis gesteuert oder event basiert erfolgen. D.h. das Erkennen des Vorliegens einer vorher definierten Situation mag eine Aktion auslösen. Ein auslösendes Ereignis mag das Vorliegen eines Messwerts in der Datenbearbeitungsvorrichtung sein. Ferner mag als auslösende Ereignisse das Ablaufen eines Zeitinterval, das Überschreiten eines Messwertes einer Schranke oder das Unterschreiten eines Messwertes einer Schranke angesehen sein.

In der Datenbearbeitungsvorrichtung mag ein Webclient implementiert sein, der die Messdaten in einem http-request an einen Server senden mag. Ein http request mag durch zumindest eines der Schlüsselworte oder die Übertragungsmethode POST, HEAD und GET gekennzeichnet sein. Das Senden der Messdaten mag von einem der Ereignisse innerhalb des Clients ausgelöst sein.

Gemäß einem weiteren exemplarischen Ausführungsbeispiel der vorliegenden Erfindung mag als Daten zumindest ein Datum bezeichnet werden, welches aus der Gruppe von Daten bestehend aus einem Messwert, einer Stausinformation und einem Betriebsparameter ausgewählt sein mag.

So mag das unberechtigte Abfragen oder Mithören von Messwertüberschreitungen oder das Abfragen von Betriebsparametern durch Konkurrenten erschwert werden.

Gemäß einem weiteren exemplarischen Ausführungsbeispiel der vorliegenden Erfindung mag ein Verschlüsselungsalgorithmus eingesetzt werden, welcher aus der Gruppe von Verschlüsselungsalgorithmen ausgewählt ist, bestehend aus Advanced Encryption Standard (AES) und Pretty Good Privacy (PGP).

Das eingesetzte Verschlüsselungsprotokoll mag von der Prozessor Leistung eines Auswertegeräts oder eines Feldgeräts, in dem es implementiert werden mag, abhängen.

Gemäß einem anderen exemplarischen Ausführungsbeispiel der vorliegenden Erfindung mag die Verschlüsselungseinrichtung eingerichtet sein, zu erkennen, ob die empfangenen Daten verschlüsselt werden sollen und wenn die Daten verschlüsselt werden sollen, mag die Verschlüsselungseinrichtung die Daten mit dem vorgebbaren Verschlüsselungsalgorithmus verschlüsseln.

Mit dieser Abfrage mögen sich Daten selektiv verschlüsseln lassen. Es mögen Daten existieren, insbesondere mag ein Typ von Daten existieren, wie beispielsweise Parameter für das Erreichen optimaler Prozessergebnisse, die sicherheitsrelevant und daher schützenswert sein mögen. Andere Daten mögen weniger sicherheitsrelevant sein. Bei letzteren mag eine Verschlüsselung nicht nötig sein.

Durch das Verzichten auf eine Verschlüsselung bei nicht sicherheitsrelevanten Daten mag sich Leistung auf den Feldgeräten einsparen lassen, da kein leistungsintensives Verschlüsselungsverfahren zum Einsatz kommen mag.

Gemäß einem weiteren exemplarischen Ausführungsbeispiel der vorliegenden Erfindung mag die Datenbearbeitungsvorrichtung eine Aktivierungseinrichtung aufweisen. Die Aktivierungseinrichtung mag mit der Verschlüsselungseinrichter verbunden sein. Die Aktivierungseinrichtung mag eingerichtet sein, die Verschlüsselungseinrichtung zu aktivieren.

Die Aktivierungseinrichtung mag ein physikalischer Schalter, ein elektronischer Schalter oder ein Softwareschalter sein. Mit der Aktivierungseinrichtung mag die gesamte Verschlüsselung an- bzw. abschaltbar sein. Nach dem Abschalten der Verschlüsselung mittels der Aktivierungseinrichtung mag sich die Datenbearbeitungsvorrichtung wie ein herkömmliches Feldgerät oder eine herkömmliche Auswerteeinrichtung bzw. Auswertegerät verhalten.

Folglich mag die Datenbearbeitungsvorrichtung nicht permanent mit Verschlüsselung arbeiten. Ein Benutzer mag also mittels der selektiven Verschlüsselung von bestimmten Daten oder der Aktivierungseinrichtung festlegen können, wann die Möglichkeit zur Verschlüsselung bestehen soll.

Die Aktivierungseinrichtung kann auch eine Smart-Card-Leseeinrichtung sein. Auf einer Smart-Card mag ein Schlüssel gespeichert sein, der beim Verschlüsseln genutzt werden mag. Durch das Einstecken der Smart-Card mag die Verschlüsselungseinrichtung aktiviert werden.

Gemäß noch einem anderen Ausführungsbeispiel der vorliegenden Erfindung mag die Verschlüsselungseinrichtung weiter eingerichtet sein, die verschlüsselten Daten mit zumindest einem Kennzeichen zu kennzeichnen das aus einer Gruppe von Kennzeichenausgewählt ist. Die Gruppe von Kennzeichen mag aus dem Versehen der verschlüsselten Daten mit einer Zieladresse für verschlüsselte Daten, dem Versehen der verschlüsselten Daten mit einem Zielverzeichnis für verschlüsselte Daten und dem Versehen der verschlüsselten Daten mit einem Flag für verschlüsselte Daten bestehen.

Mittels unterscheibarer Zieladressen und/oder unterscheidbarer Zielverzeichnisse mag von der Datenbearbeitungsvorrichtung festgelegt werden, wo die verschlüsselten und/oder die unverschlüsselten Daten auf der Datensammeleinrichtung landen. Ein Flag, welches mit den verschlüsselten Daten und/oder mit den nicht-verschlüsselten Daten verschickt werden mag, mag von der Datensammelvorrichtung und nicht von der Datenbearbeitungsvorrichtung ausgewertet werden.

Das Nicht-Vorhandensein einer Markierung mag ebenfalls als Markierung für einen besonderen Typ von Daten genutzt werden, beispielsweise für verschlüsselte Daten und/oder unverschlüsselte Daten.

Gemäß noch einem weiteren exemplarischen Ausführungsbeispiel der vorliegenden Erfindung mag der Eingang der Datenbearbeitungsvorrichtung zumindest eine Schnittstelle sein, die aus der Gruppe der Schnittstellen ausgewählt ist, bestehend aus einem Feldbus, einem Feldgeräteanschluss, einem HART^{®} Bus, einem I²C Bus, einem Profibus, einem Fieldbus Foundation^{™} Bus; einem Digital Eingang und 4...20 mA Anschluss.

Insbesondere bei einem Auswertegerät kann eine Vielzahl von Eingängen unterschiedlicher Typen vorhanden sein. Mittels eines HART^{®} Eingangs mögen sich herkömmliche HART^{®} Feldgeräte mit einer Verschlüsselungsfunktion nachrüsten lassen.

Der I²C Bus mag bei einer Integration der Datenbearbeitungsvorrichtung auf dem Feldgerät zum Einsatz kommen. Durch die Integration mag das Feldgerät mit einer Verschlüsselungsfunktion nachgerüstet werden können.

Gemäß noch einem weitern exemplarischen Ausführungsbeispiel der vorliegenden Erfindung mag der Ausgang der Datenbearbeitungsvorrichtung zumindest eine Schnittstelle sein ausgewählt aus der Gruppe der Schnittstellen bestehend aus einer seriellen Schnittstelle, einer IP (Internet Protocol) Schnittstelle, einer RJ45 Schnittstelle, einer Funkschnittstelle, einer WLAN (Wireless Local Area Network) Schnittstelle, einer GSM (Global System for Mobile communications) Schnittstelle, einer GPRS (General packet radio service) Schnittstelle, einer UMTS (Universal Mobile Telecommunications System) Schnittstelle, einer LTE (Long Term Evolution) Schnittstelle, einer WiMAX (Worldwide Interoperability for Microwave Access) Schnittstelle, einer Bluetooth Schnittstelle.

Mittels der unterschiedlichen Ausgangsschnittstellen der Datenbearbeitungsvorrichtung mag sich eine Datenbearbeitungsvorrichtung über große Distanzen mit einer Datensammelvorrichtung verbinden lassen. Die Datensammelvorrichtung mag entsprechende Schnittstellen aufweisen.

So mag eine Verbindung über ein Modem und über das Telefonnetz oder über das Internet möglich sein.

Gemäß einem weiteren exemplarischen Ausführungsbeispiel der vorliegenden Erfindung mag ein Feldgerät oder Auswertegerät geschaffen werden, welches eine Datenverarbeitungsvorrichtung aufweist. Das Feldgerät mag ein Feldgerät sein, ausgewählt aus der Gruppe der Feldgeräte bestehend aus einem Füllstandmessgerät, einem Grenzstandmessgerät, einem Temperaturmessgerät, einem Druckmessgerät, und einem Durchflußmessgerät.

Gemäß noch einem anderen exemplarischen Ausführungsbeispiel der vorliegenden Erfindung mag das Feldgerät mit der Datenbearbeitungsvorrichtung mittels einem Schraubgewinde verbindbar sein. In einem Beispiel mag sich das Schraubgewinde jeweils an einem Gehäuse des Feldgeräts und der Datenbearbeitungsvorrichtung befinden und beim Aufschrauben ineinander greifen. In einem anderen Beispiel mag statt des Schraubgewindes ein Bajonett Verschluss genutzt werden.

So mag sich die Datenbearbeitungsvorrichtung auf das Feldgerät aufschrauben lassen und ein Feldgerät, welches die Daten noch unverschlüsselt versendet mag sich mit einer Datenverschlüsselung nachrüsten lassen.

Es soll angemerkt werden, dass unterschiedliche Aspekte der Erfindung mit Bezug auf unterschiedliche Gegenstände beschrieben wurden. Insbesondere wurden einige Aspekte mit Bezug auf Vorrichtungsansprüche beschrieben, wohingegen andere Aspekte in Bezug auf Verfahrensansprüche beschrieben wurden. Ein Fachmann kann jedoch der vorangehenden Beschreibung und der folgenden Beschreibung entnehmen, dass, außer es wird anders beschrieben, zusätzlich zu jeder Kombination von Merkmalen, die zu einer Kategorie von Gegenständen gehört, auch jede Kombination zwischen Merkmalen als von diesem Text offenbart angesehen wird, die sich auf unterschiedliche Kategorien von Gegenständen bezieht. Insbesondere sollen Kombinationen zwischen Merkmalen von Vorrichtungsansprüchen und Merkmalen von Verfahrensansprüchen offenbart sein.

### Kurze Beschreibung der Figuren

Im Folgenden werden weitere exemplarische Ausführungsbeispiele der vorliegenden Erfindung mit Verweis auf die Figuren beschrieben.
Fig. 1 zeigt ein System zur Übertragung verschlüsselter Messwerte gemäß einem exemplarischen Ausführungsbeispiels der vorliegenden Erfindung.
Fig. 2 zeigt ein Flußdiagramm eines Verfahrens zur Datenbearbeitung gemäß einem exemplarischen Ausführungsbeispiels der vorliegenden Erfindung.
Fig. 3 zeigt ein Flußdiagramm eines Verfahrens zum Sammeln von Daten gemäß einem exemplarischen Ausführungsbeispiels der vorliegenden Erfindung.

### Detailierte Beschreibung von Ausführungsbeispielen

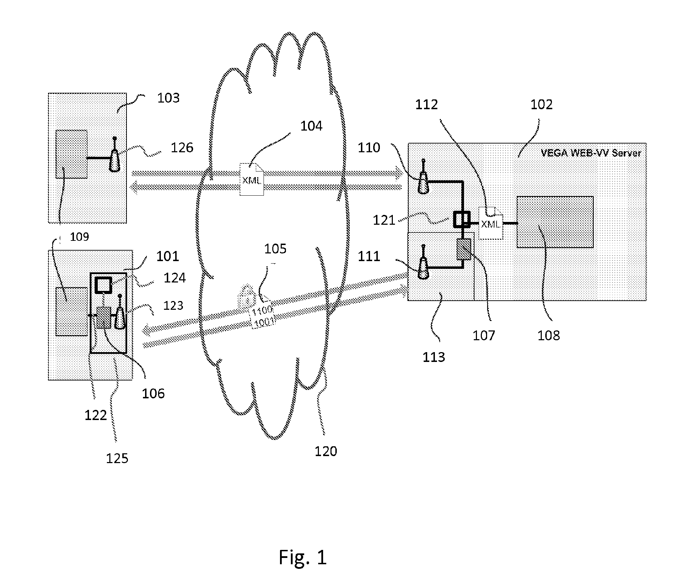

Die Darstellungen in den Figuren sind schematisch und nicht maßstäblich. In der folgenden Beschreibung der Fig. 1 bis Fig. 3 werden die gleichen Bezugsziffern für gleiche oder sich entsprechende Elemente verwendet.

Fig. 1 zeigt ein System zur Übertragung verschlüsselter Messwerte gemäß einem exemplarischen Ausführungsbeispiels der vorliegenden Erfindung.

Das System weist das erste Feldgerät 101 und das zweite Feldgerät 103 auf. Die Feldgeräte können Beispiele für Datenbearbeitungsvorrichtungen sein.

Das zweite Feldgerät 103 nutzt keine Verschlüsselung. Bei diesem zweiten Feldgerät 103 kann es sich beispielsweise um ein herkömmliches Feldgerät handeln, bei dem noch keine Möglichkeit für eine verschlüsselte Übertragung vorgesehen ist. Bei dem verschlüsselungslosen Feldgerät 103 kann es sich aber auch um ein verschlüsselungsfähiges Feldgerät handeln, bei dem die Verschlüsselung mittels einer Aktivierungseinrichtung 124 ausgeschaltet ist.

Bei dem ersten Feldgerät 101 handelt es sich um ein verschlüsselungsfähiges Feldgerät 101, bei dem die Verschlüsselung mittels Aktivierungseinrichtung 124 aktiviert ist.

Eine Messwertverarbeitung 109 kann eine nach einem Sensor (in Fig. 1 nicht gezeigt) geschaltete Verarbeitungsstufe sein, die die Daten und insbesondere einen Messwert des Sensors liefert. Die Messwertverarbeitung 109 sorgt beispielsweise für die Kalibrierung der vom Sensor gelieferten Rohdaten.

Das zweite Feldgerät 103 überträgt die durch die Messwertverarbeitung 109 erzeugten Daten 104 via Internet 120 unverschlüsselt an den zweiten Eingang 110 einer Datensammelvorrichtung 102, beispielsweise eines VEGA WEB-VV Server 102. Der zweite Eingang 110 der Datensammelvorrichtung 102 ist über eine zweite Zieladresse adressierbar. Die Daten 112 werden an den Datenverarbeitungsteil 108 oder die Datenbank 108 des Servers 102 weitergeleitet und entsprechend verarbeitet. Die verarbeiteten Daten können z.B. über einen Webbrowser (in Fig. 1 nicht dargestellt) von Kunden abgerufen werden. Die Daten des Datenverarbeitungsteils 108 liegen im selben einheitlichen Format vor, unabhängig ob die Daten verschlüsselt oder unverschlüsselt von den Feldgeräten 101, 103 an den Server 102 übertragen worden sind.

Wie Fig. 1 zu entnehmen ist nehmen die verschlüsselten Daten und die unverschlüsselten Daten getrennt Wege duch das Internet 120.

Das erste Feldgerät 101 verschlüsselt die durch die Messwertverarbeitung 109 erzeugten Daten mittels eines Verschlüsselungsverfahren in der Verschlüsselungseinrichtung 106. Als Verschlüsselungsverfahren kann z.B. das AES-Verfahren verwendet werden. Die verschlüsselten Daten 105 werden via Internet 120 oder eines anderen Kommunikationsnetzes 120 an die Zieladresse des Servers 102 oder der Datensammelvorrichtung 102 gesendet. Die Zieladresse mag einen Eingang 111 für die verschlüsselten Daten adressieren.

Der Server 102 entschlüsselt die Daten mittels dem passendem Entschlüsselungsverfahren welches in der Entschlüsselungseinrichtung 107 ausgeführt wird. Nach Durchführung der Entschlüsselung 107 stehen die Daten 112 im gleichen Format wie bei der unverschlüsselten Übertragung zur Verfügung. Die Daten 112 werden dem Datenverarbeitungsteil 108 des WEB-VV Servers 102 weitergeleitet und entsprechend verarbeitet. Die verarbeiteten Daten können z.B. über ein Webbrowser von Kunden abgerufen werden.

Da die Unterscheidung ob eine Entschlüsselung stattfindet 113 oder nicht über die Adressierung eines Eingangs 110, 111 der Datensammelvorrichtung 102 erfolgt, kann eine unverschlüsselte Datenübertragung, die in dem zweiten Feldgerät 103 wenig Resourcen benötigt, durch eine verschlüsselte Datenübertragung 105 ergänzt werden. Zur Nutzung der Verschlüsselung wird der Server 102 oder die Datensammelvorrichtung 102 um eine Entschlüsselungseinrichtung 107 ergänzt, welche über den ersten Eingang 111 angesprochen werden kann, beispielsweise unter Nutzung einer ersten Zieladresse oder eines erstes Verzeichnis. Die Verschlüsselung kann von dem ersten Feldgerät 101 genutzt werden, das die nötige Rechenleistung für die Durchführung des Verschlüsselungsverfahrens in der Verschlüsselungseinrichtung 106 bietet. Die Messwertverarbeitung 109 und die Datenverarbeitung 108 müssen gegenüber einem System das keine Verschlüsselung vorsieht nicht geändert werden und können weiterhin verwendet werden. Ein System das keine Verschlüsselung vorsieht kann somit erweitert werden. Um bestehende Datensammelvorrichtungen 102 um die Verschlüsselungsfunktionalität zu erweitern, kann ein Hardwaremodule 113 und/oder Softwaremodul 113 in eine bestehende Datensammelvorrichtung 102 integriert werden. Dazu kann das Erweiterungsmodul 113 einen Eingang 111 und einen Ausgang zur Anbindung an eine Zusammenführeinrichtung 121 aufweisen und eine Verschlüsselungseinrichtung 107. Das Hardwaremodul 113 kann als Einsteckkarte für einen Server 102 oder als integrierter Schaltkreis realisiert werden.

Die Datenbearbeitungsvorrichtung 125 kann ebenfalls als eine Einsteckkarte oder als integrierter Schaltkreis realisiert sein, wodurch sich ein Feldgerät um die Verschlüsselungsfunktion erweitern läßt.

Auf der Datenbearbeitungsvorrichtung 125 kann eine selektive Verschlüsselung realisiert werden. Dazu wertet die Datenbearbeitungsvorrichtung 125 die zu übertragenden Daten aus und verschlüsselt nur, wenn für die gerade anstehenden Daten eine Verschlüsselung vorgesehen ist. Es kann also vor der Übertragung der Daten bestimmt werden, ob eine Verschlüsselung für die zu übertragenden Daten oder für den entsprechenden Datentyp vorgesehen ist.

Mittels der Aktivierungseinrichtung 124 lässt sich die Verschlüsselung im Wesentlichen vollständig abschalten.

Mit diesen Baugruppen laesst sich folglich beispielsweise ein Feldgerät 101 realisieren, welches eine permanente Verschlüsselung vorsieht, welches also im Wesentlichen nur verschlüsselte Daten senden kann. In einem anderen Beispiel läßt sich aber auch ein Feldgerät 101 realisieren, welches wahlweise unverschlüsselte oder verschlüsselte Daten senden kann, je nach Realisierung kann dies vom Benutzer festgelegt werden oder anhand des Datentyps im Feldgerät automatisch festgelegt werden.

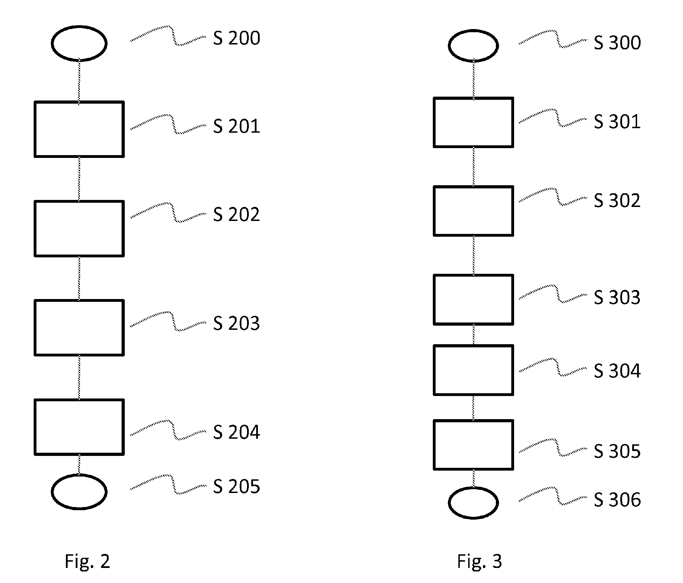

Fig. 2 zeigt ein Flußdiagramm eines Verfahrens zur Datenbearbeitung gemäß einem exemplarischen Ausführungsbeispiels der vorliegenden Erfindung.

Das Verfahren startet in einem Idle Zustand S200. In dem Schritt S201 erfolgt das Empfangen von Daten an einem Eingang der Datenbearbeitungsvorrichtung.

Im Schritt S 202 werden die in Schritt S201 eimpfangenen Daten mit einem vorgebbaren Verschlüsselungsalgorithmus verschlüsselt und im Schritt S 203 werden die Daten für einen Empfänger als verschlüsselte Daten gekennzeichnet.

Im Schritt S 204 erfolgt das Bereitstellen der verschlüsselten und gekennzeichneten Daten an einem Ausgang der Datenbearbeitungsvorrichtung 125 bevor das Verfahren in Schritt S 205 den Idle Zustand erreicht.

Fig. 3 zeigt ein Flußdiagramm eines Verfahrens zum Sammeln von Daten gemäß einem exemplarischen Ausführungsbeispiels der vorliegenden Erfindung.

Das Verfahren beginnt in dem Idle Zustand S 300. In Schritt S 301 erfolgt das Empfangen von Daten an einem ersten Eingang einer Datensammelvorrichtung 102.

Im Schritt S 302 werden die am ersten Eingang empfangenen Daten an eine Entschlüsselungseinrichtung beritgestellt. Diese am ersten Eingang empfangenen Daten werden in Schritt S303 entschlüsselt und an eine Zusammenführeinrichtung 121 bereitgestellt.

Im Schritt S 304 erfolgt das Empfangen von Daten an einem zweiten Eingang der Datensammeleinrichtung und das Bereitstellen der Daten an die Zusammenführeinrichtung 121.

Im Schritt S 305 werden die Daten des ersten Eingangs und des zweiten Eingangs zusammengeführt und an die Datenverarbeitung übergeben.

Im Schritt S 306 endet das Verfahren in einem Idle Zustand.

Ergänzend ist darauf hinzuweisen, dass "umfassend" und "aufweisend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

## Patentansprüche

1. Eine Datenbearbeitungsvorrichtung (125) für ein Feldgerät (101) der Füllstandsmessung und/oder Druckmesstechnik aufweisend:
einen Eingang (122);
einen Ausgang (123);
eine Verschlüsselungseinrichtung (106);
wobei der Eingang (122) und der Ausgang (123) mit der Verschlüsselungsseinrichtung (106) verbunden sind;
wobei der Eingang (122) zum Empfangen von Daten von einer Messwertverarbeitung (109) eingerichtet ist;
wobei der Ausgang (123) zum Bereitstellen von verschlüsselten Daten eingerichtet ist;
wobei die Verschlüsselungseinrichtung (106) eingerichtet ist, die empfangenen Daten mit einem vorgebbaren Verschlüsselungsalgorithmus zu verschlüsseln; und
wobei die Verschlüsselungseinrichtung (106) eingerichtet ist die verschlüsselten Daten für einen Empfänger der Daten als verschlüsselte Daten zu kennzeichnen; und
wobei die Verschlüsselungseinrichtung (106) eingerichtet ist, die gekennzeichneten verschlüsselten Daten am Ausgang (123) bereitzustellen.

2. Die Datenbearbeitungsvorrichtung (125) nach Anspruch 1, wobei die Daten zumindest ein Datum ist, ausgewählt aus der Gruppe von Daten bestehend aus
einem Messwert;
einer Stausinformation; und
einem Betriebsparameter.

3. Die Datenbearbeitungsvorrichtung (125) nach Anspruch 1 oder 2, wobei der Verschlüsselungsalgorithmus ausgewählt aus der Gruppe von Verschlüsselungsalgorithmen ist, bestehend aus
Advanced Encryption Standard; und
Pretty Good Privacy.

4. Datenbearbeitungsvorrichtung (125) nach einem der Ansprüche 1 bis 3, wobei die Verschlüsselungseinrichtung (106) ferner eingerichtet ist, zu erkennen, ob die empfangenen Daten verschlüsselt werden sollen; und
wenn die Daten verschlüsselt werden sollen, die Daten mit dem vorgebbaren Verschlüsselungsalgorithmus zu verschlüsseln.

5. Datenbearbeitungsvorrichtung (125) nach einem der Ansprüche 1 bis 4, ferner aufweisend:
eine Aktivierungseinrichtung (124);
wobei die Aktivierungseinrichtung (124) mit der Verschlüsselungseinrichtung (106) verbunden ist;
wobei die Aktivierungseinrichtung (124) eingerichtet ist, die Verschlüsselungseinrichtung (106) zu aktivieren.

6. Datenbearbeitungsvorrichtung (125) nach einem der Ansprüche 1 bis 5, wobei die Verschlüsselungseinrichtung (106) weiter eingerichtet ist, die verschlüsselten Daten mit zumindest einem Kennzeichen ausgewählt aus der Gruppe von Kennzeichen zu kennzeichnen, die Gruppe der Kennzeichen bestehend aus:
Versehen der verschlüsselten Daten mit einer Zieladresse für verschlüsselte Daten;
Versehen der verschlüsselten Daten mit einem Zielverzeichnis für verschlüsselte Daten; und
Versehen der verschlüsselten Daten mit einem Flag für verschlüsselte Daten.

7. Datenbearbeitungsvorrichtung (125) nach einem der Ansprüche 1 bis 6, wobei der Eingang (122) zumindest eine Schnittstelle ist, die aus der Gruppe der Schnittstellen ausgewählt ist, bestehend aus;
einem Feldbus,
einem Feldgeräteanschluss,
einem HART^{®} Bus,
einem I²C Bus,
einem Profibus,
einem Fieldbus Foundation^{™} Bus;
einem Digital Eingang; und
einem 4...20 mA Anschluss.

8. Datenbearbeitungsvorrichtung (125) nach einem der Ansprüche 1 bis 7, wobei der Ausgang (123) zumindest eine Schnittstelle ist ausgewählt aus der Gruppe der Schnittstellen bestehend aus;
einer seriellen Schnittstelle.
einer IP Schnittstelle;
einer RJ45 Schnittstelle;
einer Funkschnittstelle;
einer WLAN Schnittstelle;
einer GSM Schnittstelle;
einer GPRS Schnittstelle;
einer UMTS Schnittstelle;
einer LTE Schnittstelle;
einer WiMAX Schnittstelle;
einer Bluetooth Schnittstelle.

9. Ein Feldgerät (101) mit einer Datenbearbeitungsvorrichtung (125) nach einem der Ansprüche 1 bis 8, wobei das Feldgerät (101) ein Feldgerät ist, ausgewählt aus der Gruppe der Feldgeräte bestehend aus:
einem Füllstandmessgerät;
einem Auswertegerät;
einem Grenzstandmessgerät;
einem Temperaturmessgerät
einem Druckmessgerät; und
einem Durchflußmessgerät.

10. Feldgerät (101) nach Anspruch 9, wobei das Feldgerät (101) mit der Datenbearbeitungsvorrichtung (125) mit einem Schraubgewinde verbindbar ist.

11. Verfahren zur Datenbearbeitung aufweisend:
Empfangen von Daten an einem Eingang der Datenbearbeitungsvorrichtung;
Verschlüsseln der empfangenen Daten mit einem vorgebbaren Verschlüsselungsalgorithmus; und
Kennzeichnen der Daten für einen Empfänger als verschlüsselte Daten;
Bereitstellen der verschlüsselten und gekennzeichneten Daten an einem Ausgang der Datenbearbeitungsvorrichtung.

12. Eine Datensammelvorrichtung (102), aufweisend:
einen ersten Eingang (111);
einen zweiten Eingang (110);
eine Zusammenführeinrichtung (121);
eine Entschlüsselungseinrichtung (107);
wobei der erste Eingang (111) mit der Entschlüsselungseinrichtung (107) verbunden ist;
wobei die Entschlüsselungseinrichtung (107) mit der Zusammenführeinrichtung (121) verbunden ist;
wobei der zweite Eingang (110) mit der Zusammenführeinrichtung (121) verbunden ist;
wobei die Entschlüsselungseinrichtung (107) zum Entschlüsseln von verschlüsselten Daten eingerichtet ist;
wobei die Zusammenführeinrichtung (121) zum Zusammenführen von an dem ersten Eingang (111) empfangenen Daten und von an dem zweiten Eingang (110) empfangenen Daten eingerichtet ist.

13. Datensammelvorrichtung (102), nach Anspruch 12, wobei der erste Eingang (111) und der zweite Eingang (110) mit zumindest einem Kennzeichen unterschieden wird, ausgewählt aus der Gruppe von Kennzeichen von empfangenen Daten, die Gruppe bestehend aus:
einer Zieladresse;
einem Zielverzeichnis; und
einem Flag.

14. Ein Verfahren zum Sammeln von Daten, aufweisend:
Empfangen von Daten an einem ersten Eingang einer Datensammelvorrichtung;
Bereitstellen der am ersten Eingang empfangenen Daten an eine Entschlüsselungseinrichtung;
Entschlüsseln der am ersten Eingang empfangenen Daten und
Bereitstellen der Daten an eine Zusammenführeinrichtung;
Empfangen von Daten an einem zweiten Eingang der Datensammeleinrichtung und Bereitstellen der Daten an die Zusammenführeinrichtung;
Zusammenführen der Daten des ersten Eingangs und des zweiten Eingangs.

15. Ein Programmelement zur Datenbearbeitung, das, wenn es auf einem Prozessor ausgeführt wird, eingerichtet ist, zumindest ein Verfahren ausführt ausgewählt aus der Gruppe der Verfahren bestehend aus
dem Verfahren zur Datenbearbeitung nach Anspruch 11; und dem Verfahren zum Sammeln von Daten nach Anspruch 14.

## Geänderte Patentansprüche

### Geänderte Patentansprüche gemäss Regel 137(2) EPÜ.

**1.** Eine Datenbearbeitungsvorrichtung (125) für ein Feldgerät (101) der Füllstandsmessung und/oder Druckmesstechnik aufweisend:
einen Eingang (122);
einen Ausgang (123);
eine Verschlüsselungseinrichtung (106);
wobei der Eingang (122) und der Ausgang (123) mit der Verschlüsselungsseinrichtung (106) verbunden sind;
wobei der Eingang (122) zum Empfangen von Daten von einer Messwertverarbeitung (109) eingerichtet ist;
wobei der Ausgang (123) zum Bereitstellen von verschlüsselten Daten eingerichtet ist;
wobei die Verschlüsselungseinrichtung (106) eingerichtet ist, die empfangenen Daten mit einem vorgebbaren Verschlüsselungsalgorithmus zu verschlüsseln; und
wobei die Verschlüsselungseinrichtung (106) eingerichtet ist die verschlüsselten Daten für einen Empfänger der Daten als verschlüsselte Daten zu kennzeichnen; und
wobei die Verschlüsselungseinrichtung (106) eingerichtet ist, die gekennzeichneten verschlüsselten Daten am Ausgang (123) bereitzustellen;
wobei die Verschlüsselungseinrichtung (106) weiter eingerichtet ist, die verschlüsselten Daten mit zumindest einem Kennzeichen ausgewählt aus der Gruppe von Kennzeichen zu kennzeichnen, die Gruppe der Kennzeichen bestehend aus:
Versehen der verschlüsselten Daten mit einer Zieladresse für verschlüsselte Daten;
Versehen der verschlüsselten Daten mit einem Zielverzeichnis für verschlüsselte Daten; und
Versehen der verschlüsselten Daten mit einem Flag für verschlüsselte Daten.

**2.** Die Datenbearbeitungsvorrichtung (125) nach Anspruch 1, wobei die Daten zumindest ein Datum ist, ausgewählt aus der Gruppe von Daten bestehend aus
einem Messwert;
einer Stausinformation; und
einem Betriebsparameter.

**3.** Die Datenbearbeitungsvorrichtung (125) nach Anspruch 1 oder 2, wobei der Verschlüsselungsalgorithmus ausgewählt aus der Gruppe von Verschlüsselungsalgorithmen ist, bestehend aus
Advanced Encryption Standard; und
Pretty Good Privacy.

**4.** Datenbearbeitungsvorrichtung (125) nach einem der Ansprüche 1 bis 3, ferner aufweisend:
eine Aktivierungseinrichtung (124);
wobei die Aktivierungseinrichtung (124) mit der Verschlüsselungseinrichtung (106) verbunden ist;
wobei die Aktivierungseinrichtung (124) eingerichtet ist, die Verschlüsselungseinrichtung (106) zu aktivieren.

**5.** Datenbearbeitungsvorrichtung (125) nach einem der Ansprüche 1 bis 4, wobei der Eingang (122) zumindest eine Schnittstelle ist, die aus der Gruppe der Schnittstellen ausgewählt ist, bestehend aus;
einem Feldbus,
einem Feldgeräteanschluss,
einem HART^{®} Bus,
einem I²C Bus,
einem Profibus,
einem Fieldbus Foundation ^{™} Bus;
einem Digital Eingang; und
einem 4...20 mA Anschluss.

**6.** Datenbearbeitungsvorrichtung (125) nach einem der Ansprüche 1 bis 5, wobei der Ausgang (123) zumindest eine Schnittstelle ist ausgewählt aus der Gruppe der Schnittstellen bestehend aus;
einer seriellen Schnittstelle.
einer IP Schnittstelle;
einer RJ45 Schnittstelle;
einer Funkschnittstelle;
einer WLAN Schnittstelle;
einer GSM Schnittstelle;
einer GPRS Schnittstelle;
einer UMTS Schnittstelle;
einer LTE Schnittstelle;
einer WiMAX Schnittstelle;
einer Bluetooth Schnittstelle.

**7.** Eine Datenbearbeitungsvorrichtung (125) für ein Feldgerät (101) der Füllstandsmessung und/oder Druckmesstechnik aufweisend:
einen Eingang (122);
einen Ausgang (123);
eine Verschlüsselungseinrichtung (106);
wobei der Eingang (122) und der Ausgang (123) mit der Verschlüsselungsseinrichtung (106) verbunden sind;
wobei der Eingang (122) zum Empfangen von Daten von einer Messwertverarbeitung (109) eingerichtet ist;
wobei der Ausgang (123) zum Bereitstellen von verschlüsselten Daten eingerichtet ist;
wobei die Verschlüsselungseinrichtung (106) eingerichtet ist, zu erkennen, ob die empfangenen Daten verschlüsselt werden sollen; und
wenn die Daten verschlüsselt werden sollen, die Daten mit einem vorgebbaren Verschlüsselungsalgorithmus zu verschlüsseln;
wobei die Verschlüsselungseinrichtung (106) eingerichtet ist die verschlüsselten Daten für einen Empfänger der Daten als verschlüsselte Daten zu kennzeichnen; und
wobei die Verschlüsselungseinrichtung (106) eingerichtet ist, die gekennzeichneten verschlüsselten Daten am Ausgang (123) bereitzustellen.

**8.** Ein Feldgerät (101) mit einer Datenbearbeitungsvorrichtung (125) nach einem der Ansprüche 1 bis 6 oder 7, wobei das Feldgerät (101) ein Feldgerät ist, ausgewählt aus der Gruppe der Feldgeräte bestehend aus:
einem Füllstandmessgerät;
einem Auswertegerät;
einem Grenzstandmessgerät;
einem Temperaturmessgerät
einem Druckmessgerät; und
einem Durchflußmessgerät.

**9.** Feldgerät (101) nach Anspruch 8, wobei das Feldgerät (101) mit der Datenbearbeitungsvorrichtung (125) mit einem Schraubgewinde verbindbar ist.

**10.** Verfahren zur Datenbearbeitung aufweisend:
Empfangen von Daten an einem Eingang der Datenbearbeitungsvorrichtung;
Verschlüsseln der empfangenen Daten mit einem vorgebbaren Verschlüsselungsalgorithmus; und
Kennzeichnen der Daten für einen Empfänger als verschlüsselte Daten;
Bereitstellen der verschlüsselten und gekennzeichneten Daten an einem Ausgang der Datenbearbeitungsvorrichtung;
Kennzeichnen der verschlüsselten Daten mit zumindest einem Kennzeichen ausgewählt aus der Gruppe von Kennzeichen, die Gruppe der Kennzeichen bestehend aus:
Versehen der verschlüsselten Daten mit einer Zieladresse für verschlüsselte Daten;
Versehen der verschlüsselten Daten mit einem Zielverzeichnis für verschlüsselte Daten; und
Versehen der verschlüsselten Daten mit einem Flag für verschlüsselte Daten.

**11.** Verfahren zur Datenbearbeitung aufweisend:
Empfangen von Daten an einem Eingang der Datenbearbeitungsvorrichtung;
Erkennen, ob die empfangenen Daten verschlüsselt werden sollen; und
Verschlüsseln der empfangenen Daten mit einem vorgebbaren Verschlüsselungsalgorithmus, wenn die Daten verschlüsselt werden sollen,
Kennzeichnen der verschlüsselten Daten für einen Empfänger als verschlüsselte Daten; und
Bereitstellen der verschlüsselten und gekennzeichneten Daten an einem Ausgang der Datenbearbeitungsvorrichtung.

**12.** Eine Datensammelvorrichtung (102), aufweisend:
einen ersten Eingang (111);
einen zweiten Eingang (110);
eine Zusammenführeinrichtung (121);
eine Entschlüsselungseinrichtung (107);
wobei der erste Eingang (111) mit der Entschlüsselungseinrichtung (107) verbunden ist;
wobei die Entschlüsselungseinrichtung (107) mit der Zusammenführeinrichtung (121) verbunden ist;
wobei der zweite Eingang (110) mit der Zusammenführeinrichtung (121) verbunden ist;
wobei die Entschlüsselungseinrichtung (107) zum Entschlüsseln von verschlüsselten Daten eingerichtet ist;
wobei die Zusammenführeinrichtung (121) zum Zusammenführen von an dem ersten Eingang (111) empfangenen Daten und von an dem zweiten Eingang (110) empfangenen Daten eingerichtet ist;
wobei der erste Eingang (111) und der zweite Eingang (110) mit zumindest einem Kennzeichen unterschieden wird, ausgewählt aus der Gruppe von Kennzeichen von empfangenen Daten, die Gruppe bestehend aus:
einer Zieladresse;
einem Zielverzeichnis; und
einem Flag.

**13.** Ein Verfahren zum Sammeln von Daten, aufweisend:
Empfangen von Daten an einem ersten Eingang einer Datensammelvorrichtung;
Bereitstellen der am ersten Eingang empfangenen Daten an eine Entschlüsselungseinrichtung;
Entschlüsseln der am ersten Eingang empfangenen Daten und Bereitstellen der Daten an eine Zusammenführeinrichtung;
Empfangen von Daten an einem zweiten Eingang der Datensammeleinrichtung und Bereitstellen der Daten an die Zusammenführeinrichtung;
Zusammenführen der Daten des ersten Eingangs und des zweiten Eingangs;
Unterscheiden des ersten Eingangs (111) und des zweiten Eingangs (110) mit zumindest einem Kennzeichen, ausgewählt aus der Gruppe von Kennzeichen von empfangenen Daten, die Gruppe bestehend aus:
einer Zieladresse;
einem Zielverzeichnis; und
einem Flag.

**14.** Ein Programmelement zur Datenbearbeitung, das, wenn es auf einem Prozessor ausgeführt wird, eingerichtet ist, zumindest ein Verfahren ausführt ausgewählt aus der Gruppe der Verfahren bestehend aus
dem Verfahren zur Datenbearbeitung nach Anspruch 10;
dem Verfahren zur Datenbearbeitung nach Anspruch 11; und dem Verfahren zum Sammeln von Daten nach Anspruch 13.
